(19) Europäisches Patentamt
European Patent Office
Office européen des brevets

(11) Veröffentlichungsnummer: **0 232 487**
**A1**

(12) # EUROPÄISCHE PATENTANMELDUNG

(21) Anmeldenummer: **86116375.6**

(22) Anmeldetag: **25.11.86**

(51) Int. Cl.[4]: **H 01 B 1/12**, C 08 G 8/28

(30) Priorität: **10.12.85 DE 3543519**

(43) Veröffentlichungstag der Anmeldung: **19.08.87 Patentblatt 87/34**

(84) Benannte Vertragsstaaten: **AT BE CH DE FR GB IT LI NL SE**

(71) Anmelder: **BROWN, BOVERI & CIE Aktiengesellschaft, Kallstadter Strasse 1, D-6800 Mannheim 31 (DE)**

(72) Erfinder: **Weddigen, Gert, Dr. Dipl.-Chem., Max-Reger-Strasse 25, D-6900 Heidelberg (DE)**

(74) Vertreter: **Kempe, Wolfgang, Dr. et al, c/o BROWN, BOVERI & CIE AG ZPT Postfach 351, D-6800 Mannheim 31 (DE)**

(54) **Verfahren zur Herstellung eines Triaromatmethanpolymers mit elektrischer Leitfähigkeit.**

(57) Die Erfindung bezieht sich auf ein Verfahren zur Herstellung eines löslichen Triaromatmethanpolymers, dessen spezifische elektrische Leitfähigkeit auf einen definierten Wert eingestellt werden kann. Aufgabe der Erfindung ist es, ein Verfahren aufzuzeigen, mit dem das Triaromatmethanpolymer so ausgebildet werden kann, daß es in Lösungsmitteln gelöst werden kann, in denen auch bereits bekannte Polymere löslich sind. Erfindungsgemäß wird das undotierte Triaromatmethanpolymer mit einer Lewisbase und/oder einer Brönstedtbase dotiert. Das hierbei gebildete Reaktionsprodukt ist in Wasser, Alkoholen und in Ketonen löslich und weist eine violette Farbe auf.

EP 0 232 487 A1

0232487

BROWN, BOVERI & CIE AKTIENGESELLSCHAFT
Mannheim 6. Dez. 1985
Mp.-Nr. 664/85 ZPT/P1-Kr/Sl

BEZEICHNUNG GEÄNDERT
siehe Titelseite

## Verfahren zur Herstellung eines Polymers

Die Erfindung bezieht sich auf ein Verfahren zur Herstellung eines Polymers gemäß dem Oberbegriff des Patentanspruches 1.

Solche Polymere sind zur Herstellung von Gehäusen und Schutzüberzügen von elektrischen Geräten sowie zur Beschichtung von Verkleidungselementen für Wände und Möbel geeignet.

In der Elektrotechnik besteht ein großer Bedarf an Polymeren, deren spezifische elektrische Leitfähigkeit innerhalb eines Bereiches zwischen $10^{-14}$ und $10^{-7}$ (Ohm x cm)$^{-1}$ frei gewählt werden kann. Bei Polymeren mit dieser Eigensachaft ist es möglich, noch eine ausreichende Isolierwirkung aufrecht zu erhalten, und gleichzeitig statische Aufladungen zu vermeiden. Diese Polymere können sowohl als antistatische Oberflächenbeschichtung verwendet werden, als auch zur Isolierung zwischen metallischen Flächen unterschiedlichen Potentials dienen. Im letzteren Fall ist die Volumenleitfähigkeit groß genug, um elektrische Überschläge auf der Oberfläche zu vermeiden, welche durch leitfähige Verschmutzungen hervorgerufen werden.

Aus der DE-OS 32 48 008 ist ein elektrisch leitendes synthetisches Polymer bekannt, dessen Ketten aus Triaromatmethaneinheiten aufgebaut sind. Die elektrische Leitfähigkeit dieses nachfolgend Triaromatmethanpolymer oder kurz auch PTAM-Polymer genannten Kunststoffs kann, z.B. durch die Bildung von Charge-Transfer-Komplexen erzielt.

Polymere dieser Art weisen ohne Zusätze eine spezifische elektrische Leitfähigkeit von $10^{-15}$ bis $10^{-18}$ (Ohm x cm)$^{-1}$ auf. Um diese Triaromatmethanpolymere sinnvoll zur Herstellung von Gehäusen und Überzügen von elektrischen Geräten verwenden zu können, sollten sie eine spezifische elektrische Leitfähigkeit aufweisen, die wenigstens zwischen $10^{-7}$ und $10^{-14}$ (Ohm x cm)$^{-1}$ gewählt werden kann.

Der Erfindung liegt die Aufgabe zugrunde, ein Verfahren aufzuzeigen, mit dem ein Triaromatmethanpolymer der eingangs genannten Art so hergestellt werden kann, daß es in den gleichen Lösungsmitteln löslich ist wie bekannte Polymere, und seine spezifische elektrische Leitfähigkeit auf einen vorgebenen Wert eingestellt werden kann.

Diese Aufgabe wird erfindungsgemäß durch die kennzeichnenden Merkmale des Patentanspruches 1 gelöst.

In vorteilhafter Weise kann das nach dem erfindungsgemäßen Verfahren hergestellte Triaromatmethanpolymer in Wasser, Alkoholen und Ketonen, insbesondere in schwerflüchtigen Ketonen, wie z. B. einem Methylethylketon gelöst werden. Diese Lösungsmittel sind wesentlich preisgünstiger als beispielsweise Dimethylfornamid und Dimethylsulfoxid. Ein weiterer Vorteil ist darin zu sehen, daß diese Lösungsmittel keine oder nur eine geringe Toxizität aufweisen. Als sehr wesentlich ist die Tatsache hervorzuheben, daß auch bereits bekannte Polymere in diesen Lösungsmitteln gelöst werden können, so daß eine Wechselwirkung des Triaromatmethanpolymers mit den bekannten Polymeren hierdurch auf einfache Weise ermöglicht wird.

Das nach dem neuen Verfahren hergestellte Triaromatmethanpolymer weist eine violette Farbe auf, die es gestattet, das Polymer zur Herstellung von dekorativen Schichtpreßstoffen zu verwenden, da die unter dem Triaromatmethanpolymer angeordneten Dekorschichten durch dieses Triaromatmethanpolymer hindurch sichtbar sind.

Weitere erfindungswesentliche Merkmale sind in den Unteransprüchen gekennzeichnet.

Das erfindungsgemäße Verfahren wird nachfolgend erläutert.
Das für die Durchführung des Verfahrens verwendete Triaromatmethanpolymer kann bei der Polykondensation mindestens eines aromatischen Aldehyds und wenigstens einer aromatischen Ringverbindung gebildet werden, die wenigstens eine funktionelle Gruppe aufweist, welche in der aromatischen Ringverbindung die Elektronendichte erhöht und damit den elektrophilen Angriff begünstigt.

Das Triaromatmethanpolymer kann insbesondere durch die Polykondensation von Bisphenol-A und 4-Dymethylaminobenzaldehyd gebildet werden. Es läßt sich auch durch eine Polykondensation von Bisphenol-A und Para-Anisaldehyd herstellen. Eine katalytische Reaktion, bei der mit zwei und/oder drei Aromaten substituierte Methane zur Reaktion gebracht werden, führt ebenfalls zu dem gewünschen Ausgeangsprodukt für das erfindungsgemäße

Verfahren. Der Ausgangswerkstoff für das synthetische Triaromatmethanpolymer, dessen spezifische elektrische Leitfähigkeit in einem Bereich zwischen $2x10^{-15}$ bis $3x10^{-4}$ (Ohm x cm)$^{-1}$ frei wählbar ist, kann auch bei der Polykondensation mindestens eines aromatischen Aldehyds und wenigstens eines aromatischen Ringsystems gebildet werden, derart, daß in dem Ringsystem mindestens zwei H-Atome durch mindestens zwei funktionelle Gruppen ersetzt werden, durch welche die Elektronendichte an mindestens zwei Stellen im Ringsystem erhöht wird.

Die Polykondensation eines aromatischen Aldehyds und mindestens eines Ringsystems, welches zwei OH-Gruppen aufweist, führt auch zu dem gewünschten Triaromatmethanpolymer. Anstelle eines Ringsystems mit OH-Gruppen kann auch ein aromatisches Ringsystem verwendet werden, welches zwei SH-Gruppen aufweist. Das synthetische Polymer läßt sich auch bei der Polykondensation eines aromatischen Aldehyds und einer aromatischen Ringverbindung herstellen, welche zwei Aminogruppen enthält.

Zur Erzielung der gewünschten Löslichkeit in Wasser, Alkoholen und Ketonen wird das oben beschriebene undotierte Triaromatmethanpolymer zu einem Pulver gemahlen und bei einer vorgebbaren Temperatur mit einer Lewisbase und/oder einer Brönstedtbase umgesetzt. Solche Basen sind definitionsgemäß in der Lage, sich mit Protonen ihrer chemischen Umgebung zu assoziieren. Durch diese Basen werden an den Ketten der Triaromatmethanpolymere Wasserstoffionen abgetrennt. Es werden vor allem diejenigen Wasserstoffionen unter Zurücklassung einer negativen Ladung am Triaromatmethanpolymer abgetrennt, welche einer funktionellen Gruppe mit Säurecharakter angehören. Im Fall des undotierten Triaromatmethanpolymers handelt es sich um die Wasserstoffionen, die sich an den ringexternen C-Atomen und in den OH-Gruppen befinden. In der nachfolgenden Darstellung wird ein Teil einer Kette gezeigt, die zu einem Triaromatmethanpolymer gehört. Hierin sind diejenigen Wasserstoffionen durch U-förmige Klammern markiert, die von den Lewis- und/oder Brönstedtbasen abgetrennt werden.

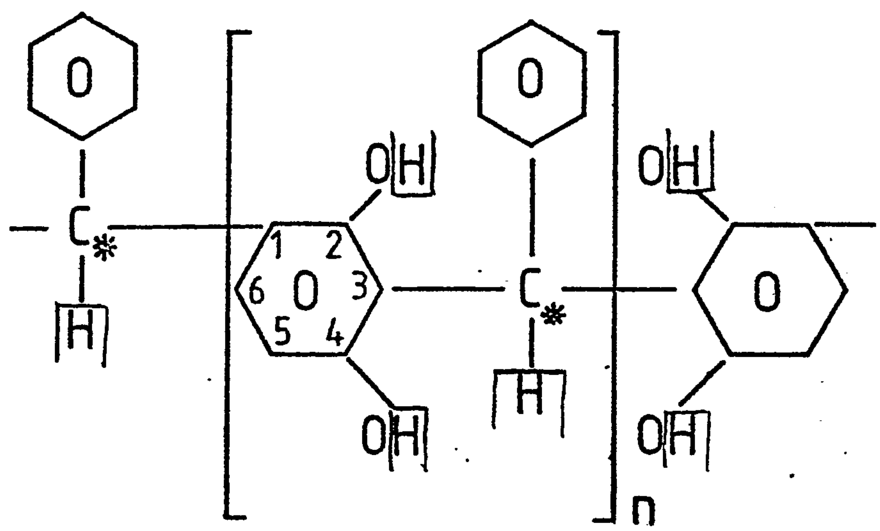

Für die Durchführung des Verfahrens kommen als Brönstedtbasen alle Alkalihydroxidverbindungen und Ammoniak in Frage. Als geeignete Lewisbasen können Amine und Amide verwendet werden.
Soll beispielsweise ein Triaromatmethanpolymer hergestellt werden, das in Wasser, Alkohlen oder Ketonen löslich sein soll, so werden 40 Gewichtsanteile Natriumhydroxid in 400 Gewichtsanteilen destillierten Wassers unter Rühren gelöst. Nach dem Abkühlen dieser Lösung werden ihr 100 Gewichtsanteile des zu Pulver gemahlenen undotierten Triaromatmethanpolymers zugesetzt. Anschließend wird die so gebildete Mischung 6 Stunden lang gerührt. In dieser Zeit entsteht ein homogenes Gemisch. Anschließend wird das Wasser im Vakuum bei 70 Grad aus diesem Gemisch entfernt. Das hieraus resulierende Reaktionsprodukt ist ein violett gefärbtes Pulver, das eine spezifische elektrische Leitfähigkeit von $10^{-5}$ (Ohm x cm)$^{-1}$ aufweist.

Ein in den oben beschriebenen Lösungsmitteln lösliches Triaromatmehtanpolymer mit der spezifischen Leifähigkeit eines Halbleiters kann durch die Dotierung mit Alkaliionen in Form von Lithium-, Kalium-, Rubidium- oder Cäsiumionen ($Li^+$, $K^+$, $Rb^b$ oder $Cs^+$) erreicht werden. Die Herstellung des Triaromatmethanpolymers kann wie bei der Dotierung mit Natriumhydroxid erfolgen. Dem unddotierten, gemahlenen Triaromatmethanpolymer werden eine oder mehrere Alkalihydroxidverbindungen der obengenannten Alkaliionen zugesetzt. Diese werden vor der Dotierung, z. B. in Wasser gelöst. Die jeweils verwendete Menge an Alkalihydroxid kann dabei auch kleiner sein als die Anzahl der OH-Gruppen und der ringexternen C-H-Bindungen zusammen. Wird das für die jeweilige Dotierung bestimmte Alkalihydroxid vor dem Vermischen mit dem undotierten Triaromatmethanpolymer in Wasser gelöst, so kann in diesem Fall eine spezifische elektirsche Leitfähigkeit zwischen $10^{-8}$ und $10^{-6}$ (Ohm x cm)$^{-1}$ erreicht werden.

Ein Triaromatmethanpolyer mit einer spezifischen elektrischen Leitfähigkeit von $10^{-6}$ (Ohm x cm)$^{-1}$ kann auch durch die Zugabe von Benzamid hergestellt werden. Hierfür werden 5 Gewichtsanteile undotiertes Triaromatmethanpolymer mit 2,5 Gewichtsanteilen Benzamid zerkleinert und vermischt. Anschließend wird dieses Gemisch auf 150 °C erwärmt und bei dieser Temperatur unter Rühren noch mindestens 20 Minuten gehalten. Das hieraus resultierende Reaktionsprodukt ist ein ebenfalls violett gefärbtes Pulver.

## Patentansprüche

1. Verfahren zur Herstellung eines löslichen Triaromatmethanpolymers mit vorgegebener spezifischer elektrischer Leitfähigkeit, dadurch gekennzeichnet, daß einem definierten Gewichtanteil des gemahlenen, undotierten Triaromatmethanpolymers ein vorgegebener Gewichtsanteil einer Lewis- und/oder einer Brönstedtbase zugestzt wird.

2. Verfahren nach Anspruch 1, dadurch gekennzeichnet, daß das Triaromatmethanpolymer mit einer oder mehreren Brönstedtbasen in Form von gelösten oder ungelösten Alkalihydroxyden oder Ammoniak dotiert wird.

3. Verfahren nach einem der Ansprüche 1 oder 2, dadurch gekennzeichnet, daß wenigstens ein Alkalihydroxid in Wasser gelöst und mit dem gemahlenen, undotierten Triaromatmethanpolymer bei Raumtemperatur vermischt und im Anschluß daran das Wasser entfernt wird.

4. Verfahren nach einem der Ansprüche 1 bis 3, dadurch gekennzeichnet, daß 10 bis 55 Gewichtsanteile Alkalihydroxid in 400 Gewichtsanteilen destillierten Wassers gelöst und bei Raumpemperatur mit 100 Gewichtsanteilen des Triaromatmethanpolymers vermischt werden, und daß im Anschluß daran das Wasser im Vakuum bei 70°C entfernt wird.

5. Verfahren nach einem der Ansprüche 1 bis 4, dadurch gekennzeichnet, daß für die Dotierung des Triaromatmethanpolymers vorzugsweise Natrium-, Lithium-, Kalium-, Rubidium oder Cäsiumionen verwendet werden.

6. Verfahren nach einem der Ansprüche 1 bis 5, dadurch gekennzeichnet, daß bezogen auf die OH-Gruppen und ringexternen C-H-Bindungen, 10 bis 100 % dieser Gruppen mit in Wasser gelöstem Alkalihydroxid umgesetzt werden.

7. Verfahren nach Anspruch 1, dadurch gekennzeichnet, daß das Triaromatmethanpolymer mit einer oder mehreren Lewisbasen in Form von Aminen und Amiden dotiert wird.

8. Verfahren nach Anspruch 7, dadurch gekennzeichnet, daß ein Gemisch bestehend aus dem undotierten, gemahlenen Triaromatmethanpolymer und Benzamid auf eine Temperatur von 150 °C erhitzt und dieses Gemisch für 20 Minuten auf dieser Temperatur gehalten wird.

Europäisches Patentamt

# EUROPÄISCHER RECHERCHENBERICHT

0232487

Nummer der Anmeldung

EP 86 11 6375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | DE-A-3 248 088 (BROWN BOVERI & CIE)<br>--- | | H 01 B 1/12<br>C 08 G 8/28 |
| A | EP-A-0 084 642 (BBC)<br>----- | | |
| | | | RECHERCHIERTE SACHGEBIETE (Int. Cl.4) |
| | | | H 01 B<br>C 08 G |

Der vorliegende Recherchenbericht wurde für alle Patentansprüche erstellt.

| Recherchenort | Abschlußdatum der Recherche | Prüfer |
|---|---|---|
| DEN HAAG | 10-03-1987 | STANGE |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument